# EUROPEAN PATENT SPECIFICATION

(11) **EP 1 771 850 B1**
(45) Date of publication and mention of the grant of the patent: **21.01.2009**
(21) Application number: 05766894.9
(22) Date of filing: 05.07.2005
(51) Int. Cl.: G11B 19/04, G11B 19/28, G11B 19/26, G11B 33/14, G11B 7/004

(54) **METHOD AND SYSTEM FOR THERMAL MANAGEMENT IN AN OPTICAL STORAGE SYSTEM.**
VERFAHREN UND VORRICHTUNG ZUR WÄRMEVERWALTUNG IN EINEM OPTISCHEN SPEICHERSYSTEM
PROCEDE ET SYSTEME DE GESTION THERMIQUE DANS UN SYSTEME DE STOCKAGE OPTIQUE

(30) Priority: 19.07.2004 EP 04300449
(43) Date of publication of application: 11.04.2007
(73) Proprietor: Koninklijke Philips Electronics N.V., 5621 BA Eindhoven (NL)
(72) Inventor: VAN DER KALL, Herman, 75008 Paris (FR)
(74) Representative: Mak, Theodorus Nicolaas
(86) International application number: PCT/IB2005/052238
(87) International publication number: WO 2006/011066

(56) References cited:
- US-B1- 6 657 932
- PATENT ABSTRACTS OF JAPAN vol. 2003, no. 07, 3 July 2003 (2003-07-03) & JP 2003 077133 A (RICOH CO LTD), 14 March 2003 (2003-03-14)
- PATENT ABSTRACTS OF JAPAN vol. 2003, no. 10, 8 October 2003 (2003-10-08) & JP 2003 173536 A (TOSHIBA CORP), 20 June 2003 (2003-06-20)
- DATABASE WPI Section EI, Week 200409 Derwent Publications Ltd., London, GB; Class T03, AN 2004-083910 XP002352045 & CN 1 453 769 A (HUASHUO COMPUTER CO LTD) 5 November 2003 (2003-11-05)

## Description

### FIELD OF THE INVENTION

This invention relates generally to thermal management in an optical storage system and, more particularly, to a system and method for effecting thermal management in respect of an optical disc drive when the temperature of the optical radiation source gets too high, so as to minimise the loss of transfer rate during data writing/reproducing.

Examples of the storage media used in such an optical disc drive are, for instance, CD-R, CD-RW, DVD, Blu-Ray Disc (BD), etc.

### BACKGROUND OF THE INVENTION

As is commonly known, an optical storage disc comprises at least one track, either in the form of a continuous spiral or in the form of multiple concentric circles, of storage space where information may be stored. Optical discs may be of the read-only type, where information is recorded during manufacture, which data can only be read by a user. The optical storage disc may also be of the type that can be written to, where information may be stored by a user.

For writing information in the storage space of the optical storage disc, or for reading information from the disc, an optical disc drive comprises, on the one hand, rotating means for receiving and rotating an optical disc, and on the other hand optical means for scanning the storage track with an optical beam. Since the technology of optical discs in general, the way in which information can be stored in an optical disc, and the way in which optical data can be read from an optical disc, is commonly known, it is not necessary here to describe this technology in detail.

The above-mentioned optical means comprises a light beam generator device for generating said optical beam. Typically, the optical beam is a laser beam, and the light beam generator device comprises a laser, usually a laser diode. In the following, the present invention is explicitly explained for the case of a laser, but it is to be understood that the principles underlying the present invention also apply for other types of light beam generator devices.

During operation, the laser generates heat, and as a result, the laser temperature rises. This is especially the case during a write operation, because the optical power needed for a write operation is higher than the optical power needed for a read operation. Apart from the design of the disc drive apparatus, the temperature rise depends *inter alia* on the rotational speed of the disc and on the duration of the operation. If the laser temperature rises too high, this may cause damage to the laser, as well as poor write quality. The laser temperature should stay below a temperature specified by the manufacturer; usually, this temperature is 75°C in the case of a DVD or CD laser.

Thus, there is a need to provide means for limiting the temperature rise of the laser. More generally, in a disc drive apparatus, there is a need to control the temperature occurring within the apparatus, especially the temperature of components which are particularly temperature-sensitive.

In the prior art, fan devices have been proposed for generating a forced air flow past the laser, thus removing heat from the laser. However, such fans involve the disadvantages of increased weight, increased cost and increased bulkiness, all of which are undesirable properties in this field.

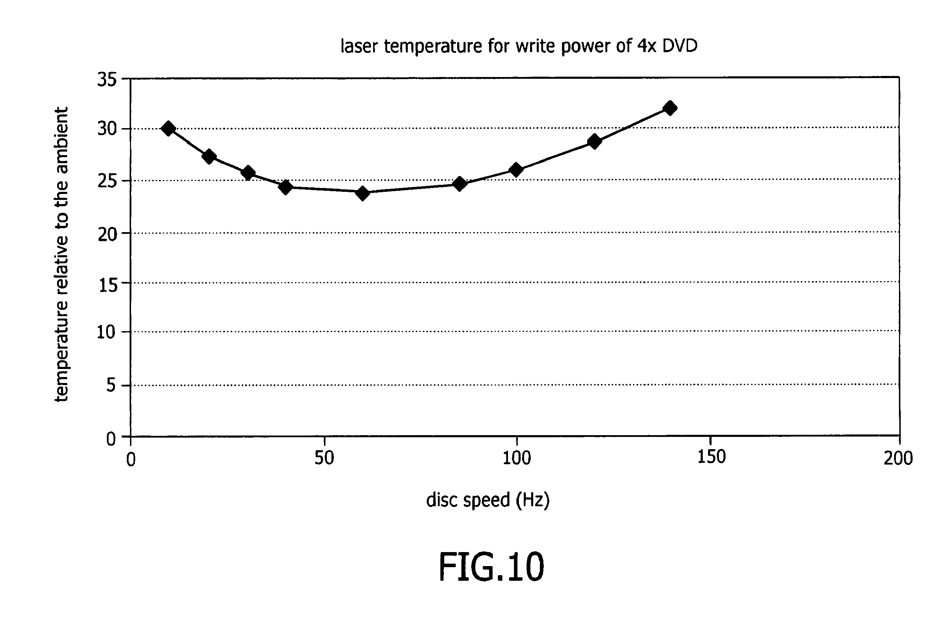

In another type of known arrangement, reliance is placed on air flow generated by a rotating disc during writing/reading to provide the required cooling action. However, this has the disadvantage that the cooling action only takes place during actual writing/reading, and that the cooling capacity of the generated air flow depends on the rotational speed of the disc. Typically, the rotational (or linear) speed of the disc is controlled for optimum performance, i.e. optimum reading or writing performance. Usually, however, this speed is not optimal for cooling purposes. For a CD, a standard speed (1X) is 3.5 - 8 Hz. A typical speed for recording CD is up to 48X. A typical speed for reading may range from 3.5 to 160 Hz. For a DVD, a typical speed for recording may nowadays be in the range from 12 to 155 Hz. Depending on apparatus design, an optimal speed with a view to cooling is in the range from 50 to 100 Hz, typically about 85 Hz, as can be seen from the graph of Figure 10.

Document US 6,657,932 B1 describes an optical storage and retrieving apparatus, and especially a temperature control device and method using a temperature detecting apparatus to control the rate, the tracking loop gain, the velocity and braking slope of the data read/write device of the optical storage and retrieving apparatus for lowering the temperature during operation, notably when the internal temperature of the optical storage and retrieving apparatus reaches a predetermined value. More particularly, the driving device for driving a carry device carrying an optical storage medium is commanded to lower the rotation rate of the carry device.

### OBJECT AND SUMMARY OF THE INVENTION

It is an object of the present invention to effect improved thermal management in an optical storage system, and provide a control system for use in an optical storage system for effecting an improved cooling action in respect of temperature-sensitive components such as the laser.

It is also an object of the invention to provide an optical storage system including such a control system.

In accordance with a first aspect of the present invention, there is provided a control system for an optical storage system as defined in a first alternative in claim 1. The first aspect of the present invention may be presented as a method of controlling the temperature of an optical storage system as defined in claim 11. In accordance with a second aspect of the present invention, there is provided a control system for an optical storage system as defined in a second alternative in claim 1. The second aspect of the present invention may be presented as a method of controlling the temperature of an optical storage system as defined in claim 12. Advantageous embodiments are defined in the dependent claims.

In a preferred embodiment, a predetermined minimum data transfer speed may be defined such that the step of reducing said data transfer speed when the temperature is determined to be greater than the predetermined threshold is only performed if the current data transfer speed is greater than said minimum data transfer speed.

This has the added advantage of optimising the thermal management of the system, because the minimum data transfer speed can be selected to be the data transfer speed with the lowest resultant temperature (such that any further reduction in data transfer rate would result in a lower disc speed and an increase in temperature).

In a preferred embodiment of the first aspect of the present invention, steps b1) and c1) are preferably repeated at predetermined intervals until the data transfer speed reaches said predetermined minimum data transfer speed.

In a preferred embodiment of the second aspect of the present invention, step a2) is repeated at predetermined intervals while the temperature is still determined to be greater than the predetermined threshold, until the data transfer speed reaches the predetermined minimum data transfer speed, at which time, if the temperature is still determined to be greater than the predetermined threshold, the optical storage system is caused to operate in said duty cycle mode.

In one exemplary embodiment, the control system may be arranged and configured to reduce the data transfer speed by reducing the rotation speed of the optical storage medium.

In an alternative exemplary embodiment, the control system may be arranged to directly reduce the data transfer speed, thereby causing a resultant reduction in rotation speed of the optical storage medium.

It is preferred that the rotation speed of the optical storage medium during the normal mode and the energy saving mode is substantially the same, as this simplifies the control algorithm, but this is not essential.

The temperature sensing means is preferably arranged to sense the temperature of the scanning beam generating means, which is preferably a laser, because it is this component, which tends to be the most temperature-dependent. However, it will be appreciated that the temperature sensing means may equally be arranged to detect the temperature of other temperature-sensitive components or even some ambient temperature relative to the optical storage system.

In a preferred embodiment, the control system is arranged and configured to compare the measured temperature against the predetermined threshold at periodic intervals throughout the operation of the optical storage system, so as to ensure that if the temperature exceeds the threshold, it is quickly identified and rectified using the process described above. However, it is also possible for the control system to be arranged to test the temperature against the threshold in response to a specific event, such as the beginning or end of a read/write operation, for example.

The present invention also extends to an optical storage system comprising means for generating an optical scanning beam, a controllable motor for rotating an optical storage medium, temperature sensing means for generating a signal representative of a temperature in relation to said optical storage system, and a control system as defined above.

These and other aspects of the present invention will be apparent from, and elucidated with reference to, the embodiments described herein.

### BRIEF DESCRIPTION OF THE DRAWINGS

Embodiments of the present invention will now be described by way of examples only and with reference to the accompanying drawings, in which:
Fig. schematically illustrates a block diagram schematically illustrating an optical disc drive;
Fig.2 is a graphical illustration of DVD write speeds as a function of disc speed and disc radius;
Fig.3 is a graphical illustration of DVD write speeds as a function of disc speed and disc radius, with a disc speed limitation of 155 Hz;
Fig.4 is a schematic flow diagram illustrating an algorithm performed by a control unit according to a first exemplary embodiment of the present invention;
Fig.5 is a graphical illustration of DVD write speeds as a function of disc speed and disc radius to illustrate the operation of the algorithm described with reference to Fig.4;
Fig.6 is a schematic flow diagram illustrating an algorithm performed by a control unit according to a second exemplary embodiment of the present invention;
Fig.7 is a graphical illustration of DVD write speeds as a function of disc speed and disc radius to illustrate the operation of the algorithm described with reference to Fig.6;
Fig.8 is a schematic flow diagram illustrating an algorithm performed by a control unit according to a third exemplary embodiment of the present invention;
Fig.9 is a schematic flow diagram illustrating an algorithm performed by a control unit according to a fourth exemplary embodiment of the present invention; and
Fig.10 is a graphical illustration of laser temperature for a write power of 4X DVD as a function of disc speed.

### DETAILED DESCRIPTION OF THE PREFERRED EMBODIMENTS

Fig. schematically illustrates an optical disc drive 1, suitable for storing information on or reading information from an optical disc 2. For rotating the disc 2, the disc drive apparatus 1 comprises a motor 4, defining a rotation axis 5. For receiving and holding the disc 2, the disc drive apparatus 1 may comprise a turntable or clamping hub 6, which in the case of a spindle motor 4 is mounted on the spindle axle 7 of the motor 4.

The disc drive apparatus I further comprises an optical system 30 for scanning tracks (not shown) of the disc 2 by an optical beam. More specifically, the optical system 30 comprises a light beam generating means 31, typically a laser such as a laser diode, which is arranged to generate a light beam 32 which is directed towards and focussed onto the disc 2 by optical means which are known per se and which are not shown for the sake of simplicity. As is well known to a person skilled in the art, during a writing process, the laser beam intensity is modulated in order to produce changes in the disc material properties, while during a reading process, the reflected light is received by an optical detector (not shown for the sake of simplicity), wherein intensity fluctuations of the reflected light correspond to information. Since the present invention is not related to the writing and/or reading process as such, it is not considered necessary to discuss these processes, or the corresponding components used, in any further detail herein.

Likewise, the disc drive apparatus 1 further comprises means for displacing the beam focus in a radial direction, which displacement means are also not shown for the sake of simplicity, while further it is not necessary here to discuss the design and operation of such displacement means in great detail.

The disc drive apparatus 1 further comprises a control unit 90 having a first control output 91 connected to a control input of the motor 4, and having a second control output 92 coupled to a control input of the laser 31. A signal output 93 of the control unit 90 is coupled to a signal input of the laser 31.

Other functional units of the disc drive apparatus 1 are generally and in common indicated as a controllable unit 40. Examples of such functional units, typically implemented as integrated circuits (ICs such as a signal processor executing code instructions stored in a memory), are signal processing units, focus actuator, radial actuator, servo drivers, encoders, decoders, photodiode, etc. The control unit 90 further has one or more control outputs coupled to control inputs of one or more of the functional units. These one or more control outputs are generally indicated in common as third control output 94 coupled to a control input 41 of the controllable unit 40.

The control unit 90 is designed to generate at its first output 91 a motor control signal S_{CM} for controlling the motor 4, to generate at its second control output 92 a laser control signal S_{LC} for controlling the laser 31, and to generate at its third control output 94 a unit control signal S_{CU} for controlling the controllable unit 40. With the motor control signal S_{CM}, the control unit 90 is capable of switching the disc drive motor 4 on or off, and to set the rotational speed of this motor. With the laser control signal S_{CL}, the control unit 90 is capable of switching the laser 31 on or off. If the laser is operating in its ON mode, the laser 31 generates its laser beam 32 in accordance with a laser data signal S_{D} generated by the control unit 90 at its signal output 93. With the unit control signal S_{CU}, the control unit 90 is capable of switching the controllable unit 40 on or off.

The disc drive apparatus 1 further comprises temperature detecting means 50, preferably associated with the laser 31, as shown, designed to generate a measuring signal S_{T} corresponding to the measured temperature, in this case the temperature of the laser 31. The measuring signal S_{T} is coupled to a temperature signal input 95 of the control unit 90. The temperature detecting means 50 may be implemented in any suitable way, as will be known to a person skilled in the art. Further, the specific design of the temperature detecting means 50 is of little relevance to the present invention, in the sense that any conventional temperature detecting means may be utilised in the present invention. Therefore, it is not considered necessary to discuss in any greater detail herein the design and operation of the temperature detecting means 50.

The control unit 90 is capable of operating in at least one normal mode and at least one safety mode. In a normal mode, the control unit 90 allows the controllable unit 40 to be switched on, as desired, and sets the operating speed of the motor 4 in accordance with requirements which are not related to temperature control, i.e. requirements such as vibrations, noise, error rate, data flow rate, etc. In fact, the normal mode might be considered as prior art mode.

The control unit is capable of operating in one of several safety modes, as well as the normal mode. One of the described safety modes comprises a duty cycle mode (DCM), in which the control unit is alternately operative in a normal mode and in an energy saving mode.

In the normal mode portion of the duty cycle mode DCM, the rotational speed of the disc may be set at any value within the range available to the control unit 90. Preferably, however, the rotational speed of the disc in normal mode is optimized for cooling in combination with a reading operation or a writing operation respectively.

In the energy saving mode portion of the duty cycle mode DCM, any writing or reading operation is suspended, the laser 31 is switched OFF, the energy consuming controllable unit 40 is switched OFF to reduce power dissipation, but the disc motor operation continues and the sledge motor (not shown) maintains its position. Thus, benefit is taken from the cooling action of the rotating disc. In the energy saving mode portion, the rotational speed of the disc may be increased or decreased as required, but this would result in associated audible frequency changes, so it is preferred that in the energy saving mode portion, the value of the rotational speed of the disc is maintained at the value set in the normal mode portion of the duty cycle just before entering the energy saving mode portion, so that the rotational speed of the disc is maintained substantially constant during the duty cycle mode DCM.

Thus, in the duty cycle mode DCM, the control unit 90 runs through a cycle of operating successively in normal mode, energy saving mode, normal mode again, etc. Each cycle may, for example, have a predetermined duration, which may for instance be selected in the range of 1 - 10 sec; a suitable value is of the order of around 5 sec. The duty cycle of the DCM may have a value of around 50%, i.e. the duration of each normal mode portion is substantially equal to the duration of each energy saving mode period. However, it is also possible to set a different value for the duty cycle, either favouring normal mode or energy saving mode.

Specifically, in an arrangement such as that described above, when a drive is, for example, writing DVD at a write speed greater than 4X and a laser temperature that is too high (relative to the manufacturer's specification), two substantially simultaneous measures can be taken to cool the laser, namely, reduce the write speed to an optimal write speed for cooling and perform writing in the above-described duty cycle mode. However, a disadvantage of this method is an unnecessary loss of record transfer rate (i.e. data transfer rate during a record operation), whereas the method employed in the present invention does not have this problem.

In accordance with the invention, when the temperature of, for example, the laser is determined to be too high, the control unit 90 is arranged to either:
a) first cause the disc drive apparatus 1 to enter a duty cycle mode, such as that described above, in which the apparatus is alternately operative in a normal mode and an energy saving mode, and then, if the temperature is determined some predetermined time later to still be too high, cause the write speed of the apparatus to drop to the next available write speed, e.g. 16X to 12X or 10X to 8X, etc..., or
b) first cause the write speed of the apparatus to drop to the next available write speed, and then, if the temperature is determined some predetermined time later to still be too high, cause the disc drive apparatus 1 to enter a duty cycle mode such as that described above.

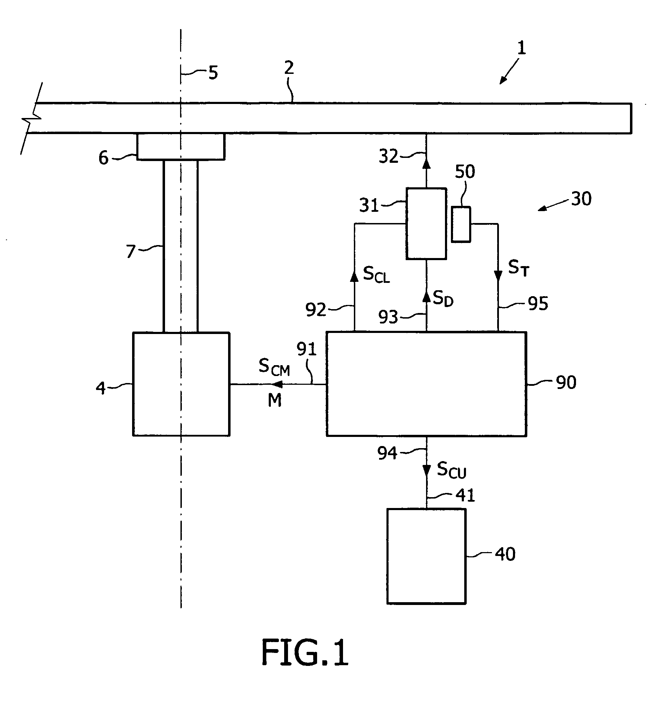

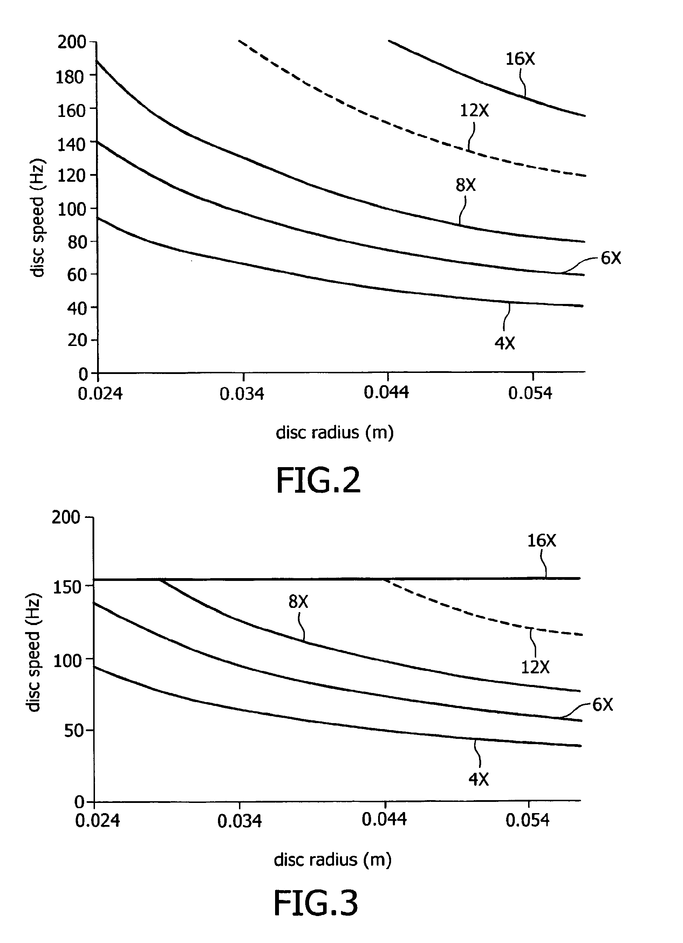

In order to facilitate the following description of exemplary embodiments of the present invention, let us first consider the writing speed diagram of Fig.2, in which DVD write speeds for a disc drive apparatus without disc speed limitations are illustrated graphically, in terms of write speeds 4X, 6X, 8X, 12X and 16X, wherein 4X is the lowest write speed illustrated and 16X is the highest.

Most practical disc drives, on the other hand, have a disc speed limitation, due to factors such as power consumption, dynamics, etc. which may, for example, result in the DVD recording speed diagram of Fig.3, which illustrates graphically disc speed as a function of disc radius and DVD writing speed, given a disc speed limitation of 155 Hz. Writing a DVD at a write speed of 12X in this case is as follows: The drive starts writing on the inner diameter (0.024 m) of the disc at the maximum disc speed (155 Hz). The actual write speed (over-speed) starts between 6X and 8X and, at a disc radius of about 0.044 m, the write speed 12X is reached. From that disc radius to the outer diameter, the disc speed will drop according to the broken line.

It will be appreciated from the above that there are at least two ways of dropping the write speed of the disc drive apparatus down to the next available write speed, the first of which involves actively spinning the drive down to a lower disc rotating speed so that the write speed is reduced accordingly, and the second involves actively reducing the write speed to the next available write speed, in response to which the disc rotating speed follows suit.

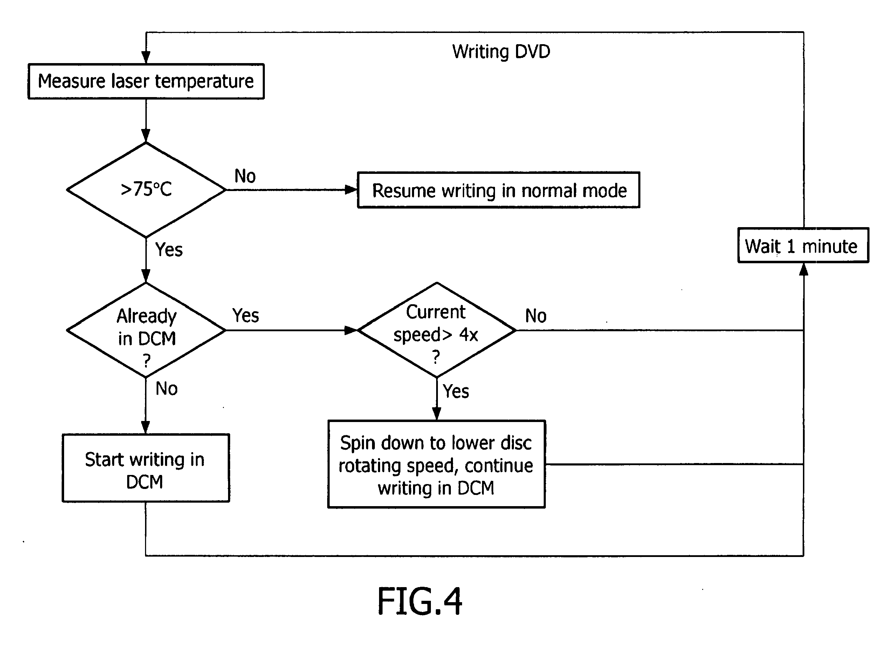

Thus, referring to Fig.4 of the drawings, in a control unit according to a first exemplary embodiment of the present invention, at periodic intervals during operation of the disc drive, a signal S_{T} representative of the measured temperature (of the laser or other temperature-sensitive component) is received and compared against a threshold value (e.g. 75°C) to determine if the measured temperature is greater than the threshold value. If not, the control unit causes the drive to commence or continue operation in the normal mode. If, however, it is determined that the measured temperature is greater than the threshold value, then the control unit 90 next determines if the drive is operating in the above-mentioned duty cycle mode DCM. If not, the drive is caused to commence writing in the duty cycle mode, and the above-described process is repeated after a predetermined interval, e.g. 1 minute. If, on the other hand, it is determined that the drive is already operating in the duty cycle mode, the control unit 90 next determines if the current write speed is greater than some predetermined minimum (in this case 4X, for reasons which will be explained later). If not, then the drive is actively spun down to a lower disc rotating speed, while continuing operation in the duty cycle mode. If, on the other hand, the write speed is already at the above-mentioned predetermined minimum, then the drive is simply caused to continue to write in the duty cycle mode, at the current writing speed, and the above-described process may then be repeated, for example, after the above-mentioned predetermined interval, e.g. 1 minute.

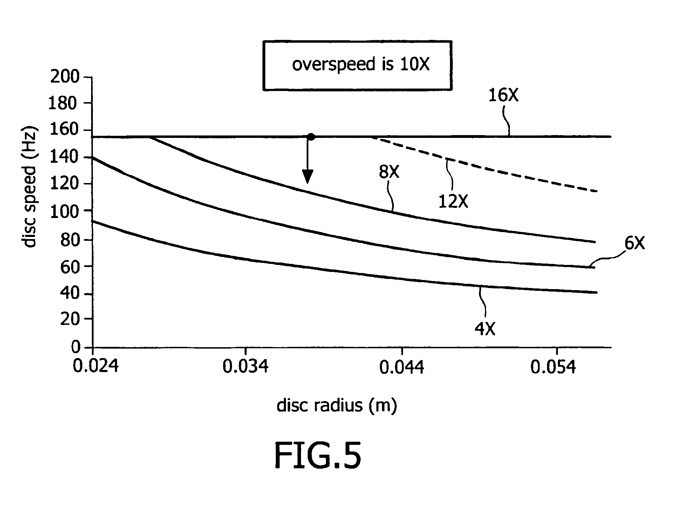

In response to the active spinning down of the disc rotating speed, the write speed is automatically reduced to the next available write speed. Referring to Fig.5 of the drawings, it is illustrated schematically that, when for example, the drive spins down from a disc rotating speed of 155 Hz to around 115 Hz, the write speed immediately drops from about 10X over-speed to 8X speed.

In the described embodiments, 4X DVD write speed is the write speed with the lowest temperature and any further reduction in write speed actually has the effect of increasing the temperature. Thus, in these particular exemplary embodiments, a 4X write speed is selected as the predetermined minimum.

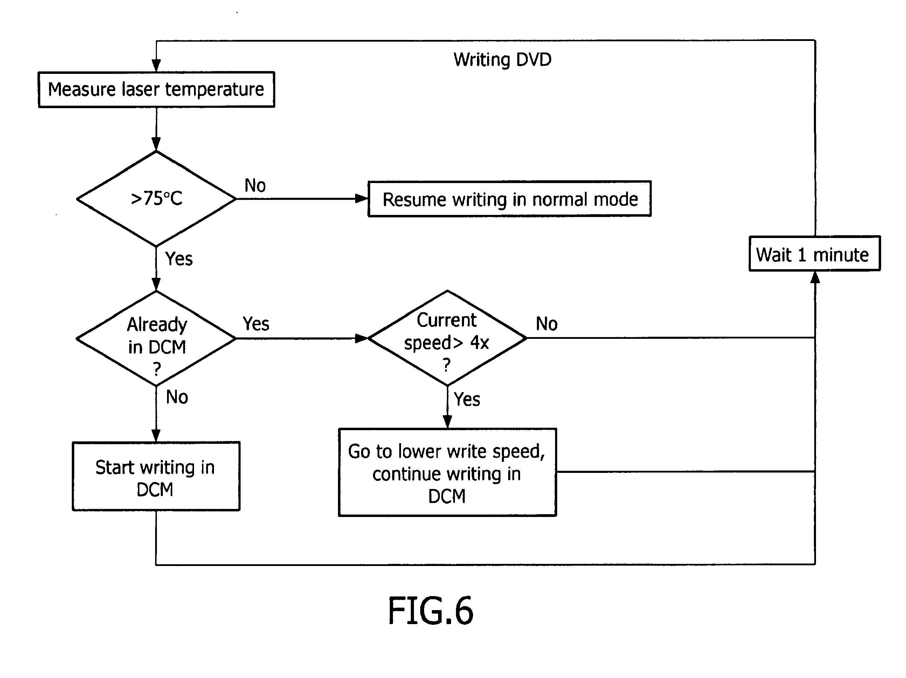

Referring to Fig.6 of the drawings, in a control unit according to a second exemplary embodiment of the present invention, the algorithm utilised is similar in many respects to that of Fig.4. Thus, at periodic intervals during operation of the disc drive, a signal S_{T} representative of the measured temperature (of the laser or other temperature-sensitive component) is received and compared against a threshold value (in this case 75°C) to determine if the measured temperature is greater than the threshold value. If not, the control unit causes the drive to commence or continue operation in the normal mode. If, however, it is determined that the measured temperature is greater than the threshold value, then the control unit 90 next determines if the drive is operating in the above-mentioned duty cycle mode DCM. If not, the drive is caused to commence writing in the duty cycle mode, and the above-described process is repeated after a predetermined interval, e.g. 1 minute. If, on the other hand, it is determined that the drive is already operating in the duty cycle mode, the control unit 90 next determines if the current write speed is greater than some predetermined minimum (again, in this particular case, 4X). If not, then the write speed of the drive is reduced to the next available write speed, while continuing operation in the duty cycle mode. If, on the other hand, the write speed is already at the above-mentioned predetermined minimum, then the drive is simply caused to continue to write in the duty cycle mode, at the current writing speed, and the above-described process is repeated after the above-mentioned predetermined interval, e.g. 1 minute.

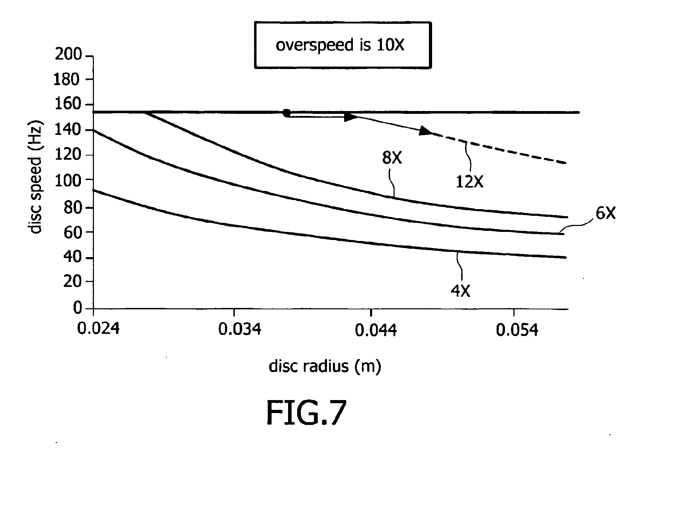

In response to the reduction in write speed, the drive continues to operate at the existing write speed until the next write speed down is actually available (relative to the disc radius being written), at which point the write speed is dropped to the next available write speed and the disc rotating speed then follows suit. Referring to Fig.7 of the drawings, it is illustrated schematically that when, for example, the drive is initially operating at a write speed of 16X, the control unit causes the drive to "skip" the 16X such that, when the disc radius is 0.044 mm, the write speed will drop to 12X and the disc rotating speed will then reduce accordingly. There is no need for an immediate reduction in disc rotating speed. However, it will be appreciated that, in the case that the drive is already writing at an over speed of 14X, an immediate reduction in disc rotating speed would be required.

Thus, in summary, in the above-described exemplary embodiments, when the drive is writing DVD above 4X and the laser temperature is too high (relative to some predetermined threshold, based on the manufacturer's specification, for example), first the drive goes into duty cycle mode, without a disc rotation speed change. If, after a short period of time, the laser temperature is still too high, the drive drops to the next available write speed and continues writing in the duty cycle mode. The measured temperature is compared against the predetermined threshold at periodic intervals and the write speed is dropped to the next available write speed until the 4X write speed is reached. At the 4X write speed, the drive will not drop to the next available write speed, even if the laser temperature is still too high, although the drive will remain in the duty cycle mode (until the measured temperature is determined to no longer exceed the predetermined threshold.

One of the most significant resulting advantages is that in the case of high laser temperatures, the record transfer rate will be 2 or 3 times higher than in the case of a known thermal management algorithm. It will be appreciated that, in order for the duty cycle mode to work, especially at high write speeds, it is necessary to provide a suitable focus capture algorithm (so that accurate focus capture can be achieved every time the drive jumps from the energy saving mode to the normal mode).

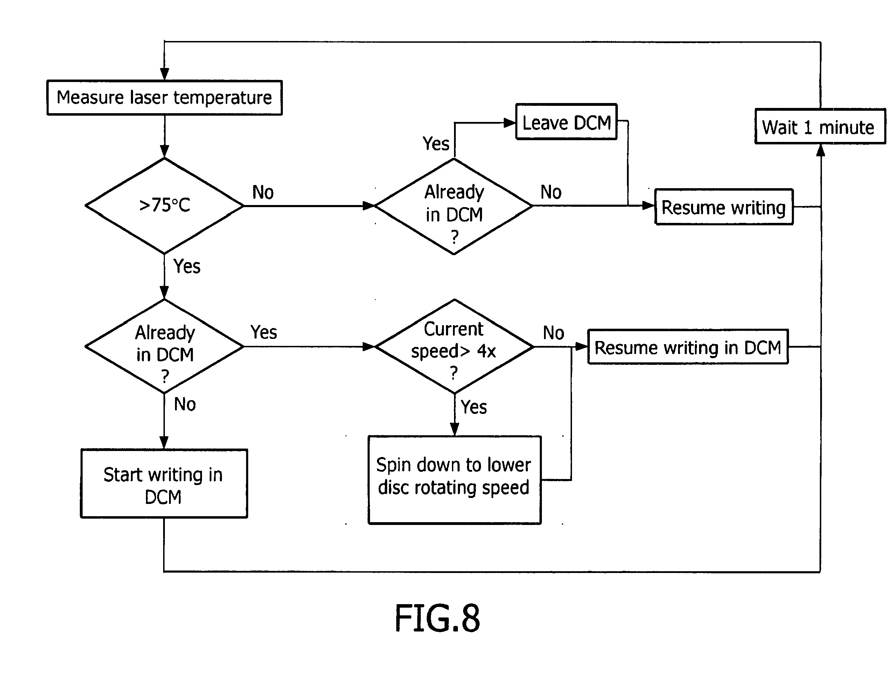

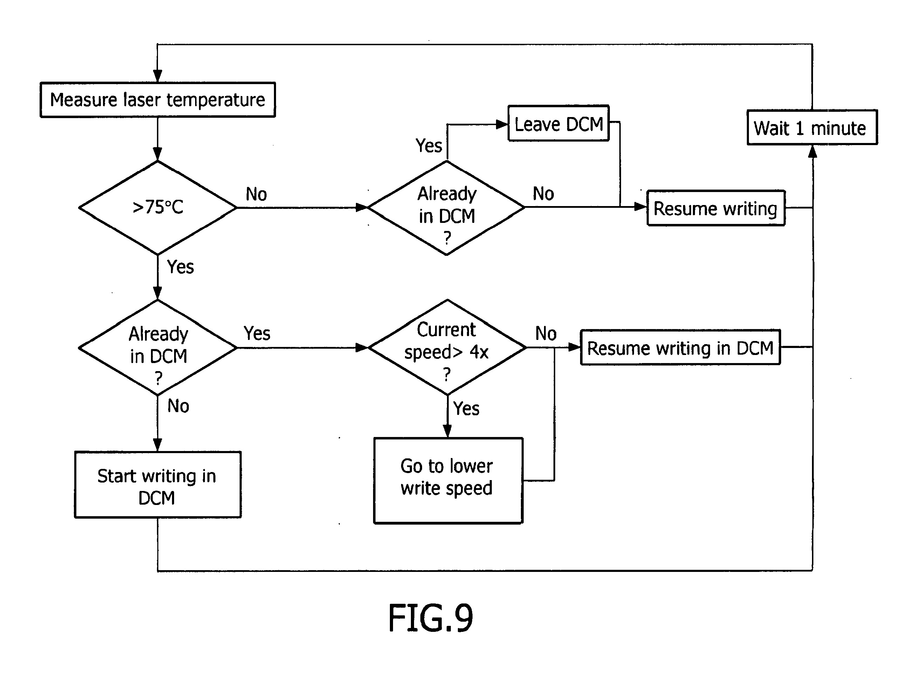

In another exemplary embodiment of the invention, when it is determined that the measured temperature is greater than the predetermined threshold, the control unit may be arranged to first cause the write speed to drop to the next available write speed (either by actively reducing the disc rotation speed (Fig. 8) or by causing the drive to "skip" the current write speed (Fig.9), as described above), and then commence writing in the duty cycle mode (if, after a predetermined time at the lower write speed, the measured temperature is still determined to be greater than the predetermined threshold value.

In the described embodiments, 4XDVD write speed is the write speed with the lowest temperature and any further reduction in write speed actually has the effect of increasing the temperature. Thus, in these particular exemplary embodiments, a 4X write speed is assumed to be the predetermined minimum.

It should be noted that the above-mentioned embodiments illustrate rather than limit the invention, and that those skilled in the art will be capable of designing many alternative embodiments without departing from the scope of the invention as defined by the appended claims. For instance, instead of monitoring the laser temperature, it is possible that the temperature of another critical component is monitored, or even that a temperature sensor is arranged at a location within the apparatus for monitoring a local ambient temperature. In addition, it should also be clear, for example, that the expression "optical disc" also applies to magneto-optical discs. It should be noted that the temperature may be measured in the case of a specific event, such as the end of a read/write operation, but preferably the temperature is measured continuously, at (preferably regular) intervals. Further, it should be noted that in this text, the reference numeral 40 and the phrase "controllable unit" are used to indicate those functional units which are actually switched on or off by the control unit 90 (upon entry into the energy saving mode), whereas the disc drive apparatus may comprise further functional units which are not switched off in the energy saving mode.

In the claims, any reference signs placed in parentheses shall not be construed as limiting the claims. The word "comprising" and "comprises", and the like, does not exclude the presence of elements or steps other than those listed in any claim or the specification as a whole. The singular reference of an element does not exclude the plural reference of such elements and vice-versa. The invention may be implemented by means of hardware comprising several distinct elements, and by means of a suitably programmed computer. In a device claim enumerating several means, several of these means may be embodied by one and the same item of hardware. The mere fact that certain measures are recited in mutually different dependent claims does not indicate that a combination of these measures cannot be used to advantage.

## Claims

1. A control system (9) for an optical storage system (1) comprising :
- means (30) for generating an optical scanning beam,
- a controllable motor (4) for rotating an optical storage medium (2),
- temperature sensing means (50) for generating a signal (St) representative of a temperature in relation to said optical storage system (1),
said control system (90) being arranged and configured to cause said optical storage system (1) to operate in a normal mode having a first data transfer speed when said temperature is determined to be below a predetermined threshold,
**characterized in that** said control system (90) is arranged and configured, if said temperature is determined to be greater than said predetermined threshold, either to :
a1) first cause said optical storage system (1) to switch to an alternating mode in which it is alternatively operative in said normal mode having said first data transfer speed, and an energy saving mode in which said optical scanning beam is switched off and said optical storage medium (2) rotates,
b1) determine, after a predetermined period of time, if said temperature is still greater than said predetermined threshold and, if so,
c1) then reduce the data transfer rate to a second data transfer rate, lower than said first data transfer rate, and cause said optical storage system (1) to operate in an alternating mode in which it is alternately operative in a normal mode having said second data transfer speed, and an energy saving mode in which said optical scanning beam is switched off and said optical storage medium (2) rotates, or to
a2) first reduce said data transfer rate to a second data transfer rate, lower than said first data transfer rate, and cause said optical storage system (1) to operate in said normal mode having said second data transfer rate,
b2) determine, after a predetermined period of time, if said temperature is still greater than said predetermined threshold and, if so,
c2) then cause said optical storage system (1) to operate in an alternating mode in which it is alternately operative in a normal mode having said second data transfer speed, and an energy saving mode in which said optical scanning beam is switched off and said optical storage medium (2) rotates.

2. A control system (90) according to claim 1, wherein steps b1) and c1) are repeated at predetermined intervals until the data transfer speed reaches a predetermined minimum data transfer speed.

3. A control system (90) according to claim 1, wherein step a2) is repeated at predetermined intervals while the temperature is still determined to be greater than the predetermined threshold, until the data transfer speed reaches a predetermined minimum data transfer speed, at which time, if the temperature is still determined to be greater than the predetermined threshold, the optical storage system (1) is caused to operate in said alternating mode.

4. A control system (90) according to claim 1, arranged and configured to reduce the data transfer speed by reducing the rotation speed of the optical storage medium (2).

5. A control system (90) according to claim 1, arranged and configured to directly reduce the data transfer speed, thereby causing a resultant reduction in rotation speed of the optical storage medium (2).

6. A control system (90) according to claim 1, wherein the rotation speed of the optical storage medium (2) during the normal mode and the energy saving mode is substantially the same.

7. A control system (90) according to claim 1, wherein the temperature sensing means (50) is arranged to sense the temperature of the scanning beam generating means (30).

8. A control system (90) according to claim 1, arranged and configured to compare the measured temperature against the predetermined threshold at periodic intervals throughout the operation of the optical storage system (1).

9. A control system (90) according to claim 1, arranged and configured to test the temperature against the predetermined threshold in response to a specific event.

10. An optical storage system (1) comprising a control system according to claim 1.

11. A method of controlling the temperature of an optical storage system (1) comprising means (30) for generating an optical scanning beam and a controllable motor (4) for rotating an optical storage medium (2), said method comprising the steps of :
- sensing the temperature of said optical storage system (1) for generating a signal (St),
- operating said optical storage system (1) in a normal mode having a first data transfer speed when said temperature is determined to be below a predetermined threshold,
**characterized**, if said temperature is determined to be greater than said predetermined threshold, by:
a) switching said optical storage system (1) to an alternating mode in which it is alternatively operative in said normal mode having said first data transfer speed, and an energy saving mode in which said optical scanning beam is switched off and said optical storage medium (2) rotates,
b) determining, after a predetermined period of time, if said temperature is still greater than said predetermined threshold and, if so,
c) reducing the data transfer rate to a second data transfer rate, lower than said first data transfer rate, and operating said optical storage system (1) in an alternating mode in which it is alternately operative in a normal mode having said second data transfer speed, and an energy saving mode in which said optical scanning beam is switched off and said optical storage medium (2) rotates.

12. A method of controlling the temperature of an optical storage system (1) comprising means (30) for generating an optical scanning beam and a controllable motor (4) for rotating an optical storage medium (2), said method comprising the steps of :
- sensing the temperature of said optical storage system (1) for generating a signal (St),
- operating said optical storage system (1) in a normal mode having a first data transfer speed when said temperature is determined to be below a predetermined threshold,
**characterized**, if said temperature is determined to be greater than said predetermined threshold, by:
a) reducing said data transfer rate to a second data transfer rate, lower than said first data transfer rate, and operating said optical storage system (1) in said normal mode having said second data transfer rate,
b) determining, after a predetermined period of time, if said temperature is still greater than said predetermined threshold and, if so,
c) operating said optical storage system (1) in an alternating mode in which it is alternately operative in a normal mode having said second data transfer speed, and an energy saving mode in which said optical scanning beam is switched off and said optical storage medium (2) rotates.

## Patentansprüche

1. Steuersystem (9) für ein optisches Speichersystem (1), wobei dieses Steuersystem Folgendes umfasst:
- Mittel (30) zum Erzeugen eines optischen Abtaststrahlenbündels,
- einen steuerbaren Motor (4) zum Drehen eines optischen Speichermediums (2),
- Temperaturfühlmittel (50) zum Erzeugen eines Signals (St), das für eine Temperatur repräsentativ ist, und zwar in Bezug auf das genannte optische Speichersystem (1),
wobei das genannte Steuersystem (90) derart ausgebildet und konfiguriert ist, dass es bewirkt, dass das genannte optische Speichersystem (1) in einer normalen Betriebsart mit einer ersten Datenübertragungsgeschwindigkeit arbeitet, wenn ermittelt worden ist, dass die genannte Temperatur unterhalb einer vorbestimmten Schwelle liegt,
**dadurch gekennzeichnet, dass** das genannte Steuersystem (90) derart ausgebildet und konfiguriert ist, dass es, wenn ermittelt worden ist, dass die genannte Temperatur höher ist als die vorbestimmte Schwelle, entweder:
a1) zunächst bewirkt, dass das optische Speichersystem (1) in eine Wechselbetriebsart geschaltet wird, in der es in der normalen Betriebsart mit der genannten ersten Datenübertragungsgeschwindigkeit und in einer Energiesparbetriebsart, in der das optische Abtaststrahlenbündel abgeschaltet ist und das genannte optische Speichersystem (2) sich dreht, abwechselnd wirksam ist
b1) ermittelt, und zwar nach einer vorbestimmten Zeitperiode, ob die genannte Temperatur noch immer höher ist als die vorbestimmte Schwelle, und, sollte dies der Fall sein,
c1) dann die Datenübertragungsrate auf eine zweite Datenübertragungsrate reduziert, die niedriger ist als die genannte erste Datenübertragungsrate, und bewirkt, dass das genannte optische Speichersystem (1) in einer Wechselbetriebsart arbeitet, in der es in einer normalen Betriebsart mit der genannten zweiten Datenübertragungsgeschwindigkeit und in einer Energiesparbetriebsart, in der das optische Abtaststrahlenbündel abgeschaltet ist und das genannte optische Speichermedium (2) sich dreht, abwechselnd wirksam ist, oder:
a2) zunächst die genannte Datenübertragungsrate auf eine zweite Datenübertragungsrate reduziert, die niedriger ist als die genannte erste Datenübertragungsrate, und bewirkt, dass das genannte optische Speichersystem (1) in der genannten normalen Betriebsart mit der genannten zweiten Datenübertragungsrate arbeitet,
b2) ermittelt, und zwar nach einer vorbestimmten Zeitperiode, ob die genannte Temperatur noch immer höher ist als die vorbestimmte Schwelle, und, sollte dies der Fall sein,
c2) dann bewirkt, dass das genannte optische Speichersystem (1) in einer Wechselbetriebsart arbeitet, in der es in einer normalen Betriebsart mit der genannten zweiten Datenübertragungsgeschwindigkeit und in einer Energiesparbetriebsart, in der das optische Abtaststrahlenbündel abgeschaltet ist und das genannte optische Speichermedium (2) sich dreht, abwechselnd wirksam ist,

2. Steuersystem (90) nach Anspruch 1, wobei die Schritte b1) und c1) in vorbestimmten Intervallen wiederholt werden, bis die Datenübertragungsgeschwindigkeit eine vorbestimmte minimale Datenübertragungsgeschwindigkeit erreicht.

3. Steuersystem (90) nach Anspruch 1, wobei der Schritt a2) in vorbestimmten Intervallen, während noch immer ermittelt wird, dass die Temperatur höher ist als die vorbestimmte Schwelle, wiederholt wird, bis die Datenübertragungsgeschwindigkeit eine vorbestimmte minimale Datenübertragungsgeschwindigkeit erreicht, wobei zu diesem Zeitpunkt, wenn noch immer ermittelt wird, dass die Temperatur höher ist als die vorbestimmte Schwelle, dafür gesorgt wird, dass das optische Speichersystem (1) in der genannten Wechselbetriebsart arbeitet.

4. Steuersystem (90) nach Anspruch 1, ausgebildet und konfiguriert zum Reduzieren der Übertragungsgeschwindigkeit durch Reduktion der Drehzahl des optischen Speichermediums (2).

5. Steuersystem (90) nach Anspruch 1, ausgebildet und konfiguriert zum direkten Reduzieren der Datenübertragungsgeschwindigkeit, wodurch eine resultierende Reduktion der Drehzahl des optischen Speichermediums (2) bewirkt wird.

6. Steuersystem (90) nach Anspruch 1, wobei die Drehzahl des optischen Speichermediums (2) während der normalen Betriebsart und der Energiesparbetriebsart im Wesentlichen die gleiche ist.

7. Steuersystem (90) nach Anspruch 1, wobei das Temperaturfühlmittel (50) ausgebildet ist, die Temperatur der Abtaststrahlerzeugungsmittel (30) zu messen.

8. Steuersystem (90) nach Anspruch 1, ausgebildet und konfiguriert zum Vergleichen der gemessenen Temperatur mit der vorbestimmten Schwelle, und zwar in periodischen Intervallen während des gesamten Betriebs des optischen Speichersystems (1).

9. Steuersystem (90) nach Anspruch 1, ausgebildet und konfiguriert zum Überprüfen der Temperatur im Vergleich zu der vorbestimmten Schwelle, und zwar in Reaktion auf ein bestimmtes Ereignis.

10. Optisches Speichersystem (1) mit einem Steuersystem nach Anspruch 1.

11. Verfahren zur Steuerung der Temperatur eines optischen Speichersystems (1), das Mittel (30) zum Erzeugen eines optischen Abtaststrahlenbündels und einen steuerbaren Motor (4) zum Drehen eines optischen Speichermediums (2) umfasst, wobei das Verfahren die nachfolgenden Verfahrensschritte umfasst:
- Messen der Temperatur des genannten optischen Speichersystems (1) zum Erzeugen eines Signals (St),
- Betreiben des genannten optischen Speichersystems (1) in einer normalen Betriebsart mit einer ersten Datenübertragungsgeschwindigkeit, wenn ermittelt worden ist, dass die genannte Temperatur unterhalb einer vorbestimmten Schwelle liegt, **gekennzeichnet**, wenn ermittelt worden ist, dass die genannte Temperatur höher ist als die vorbestimmte Schwelle, durch
a) Schalten des optischen Speichersystems (1) in eine Wechselbetriebsart, in der es in der normalen Betriebsart mit der genannten ersten Datenübertragungsgeschwindigkeit und in einer Energiesparbetriebsart, in der das optische Abtaststrahlenbündel abgeschaltet ist und das genannte optische Speichersystem (2) sich dreht, abwechselnd wirksam ist,
b) Ermitteln, und zwar nach einer vorbestimmten Zeitperiode, ob die genannte Temperatur noch immer höher ist als die vorbestimmte Schwelle, und, sollte dies der Fall sein,
c) Reduzieren der Datenübertragungsrate auf eine zweite Datenübertragungsrate, die niedriger ist als die genannte erste Datenübertragungsrate und Betreiben des genannten optischen Speichersystems (1) in einer Wechselbetriebsart, in der es in einer normalen Betriebsart mit der genannten zweiten Datenübertragungsgeschwindigkeit und in einer Energiesparbetriebsart, in der das optische Abtaststrahlenbündel abgeschaltet ist und das genannte optische Speichermedium (2) sich dreht, abwechselnd wirksam ist.

12. Verfahren zur Steuerung der Temperatur eines optischen Speichersystems (1) mit Mitteln (30) zum Erzeugen eines optischen Abtaststrahls und mit einem steuerbaren Motor (4) zum Drehen eines optischen Speichermediums (2), wobei das Verfahren die nachfolgenden Verfahrensschritte umfasst:
- Messen der Temperatur des genannten optischen Speichersystems (1) zum Erzeugen eines Signals (St),
- Betreiben des genannten optischen Speichersystems (1) in einer normalen Betriebsart mit einer ersten Datenübertragungsgeschwindigkeit, wenn ermittelt worden ist, dass die genannte Temperatur unterhalb einer vorbestimmten Schwelle liegt, **gekennzeichnet**, wenn ermittelt worden ist, dass die Temperatur höher ist als die vorbestimmte Schwelle, durch
a) Reduzieren der genannten Datenübertragungsrate auf eine zweite Datenübertragungsrate, die niedriger ist als die genannte erste Datenübertragungsrate, und Betreiben des genannten optischen Speichersystems (1) in der genannten normalen Betriebsart mit der genannten zweiten Datenübertragungsrate,
b) Ermitteln, und zwar nach einer vorbestimmten Zeitperiode, ob die Temperatur noch immer höher ist als die vorbestimmte Schwelle, und, sollte dies der Fall sein,
c) Betreiben des genannten optischen Speichersystems (1) in einer Wechselbetriebsart, in der es in einer normalen Betriebsart mit der genannten zweiten Datenübertragungsgeschwindigkeit und in einer Energiesparbetriebsart, in der das optische Abtaststrahlenbündel abgeschaltet ist und das genannte optische Speichermedium (2) sich dreht, abwechselnd wirksam ist.

## Revendications

1. Système de contrôle (90) pour un système de stockage optique (1) comprenant :
- un moyen (30) pour générer un faisceau de balayage optique,
- un moteur réglable (4) pour faire tourner un support de stockage optique (2),
- un moyen de détection de température (50) pour générer un signal (St) représentatif d'une température en rapport avec ledit système de stockage optique (1), ledit système de contrôle (90) étant agencé et configuré pour faire fonctionner ledit système de stockage optique (1) dans un mode normal présentant une première vitesse de transfert de données lorsque ladite température est déterminée comme étant en dessous d'un seuil prédéterminé,
**caractérisé en ce que** le système de contrôle (90) est agencé et configuré pour, si ladite température est déterminée comme étant supérieure audit seuil prédéterminé, soit :
a1) en premier lieu amener ledit système de stockage optique (1) à commuter vers un mode alternant dans lequel il est actif tantôt dans ledit mode normal présentant ladite première vitesse de transfert de données, et tantôt dans un mode d'économie d'énergie dans lequel ledit faisceau de balayage optique est éteint et ledit support de stockage optique (2) tourne,
b1) déterminer, après une période de temps prédéterminée, si ladite température est encore supérieure audit seuil prédéterminé et, si c'est le cas,
c1) alors réduire alors la vitesse de transfert de données vers une seconde vitesse de transfert de données, inférieure à ladite première vitesse de transfert de données, et faire fonctionner ledit système de stockage optique (1) dans un mode alternant dans lequel il est actif tantôt dans un mode normal présentant ladite seconde vitesse de transfert de données, et tantôt dans un mode d'économie d'énergie dans lequel ledit faisceau de balayage optique est éteint et ledit support de stockage optique (2) tourne, ou soit
a2) en premier lieu réduire ladite vitesse de transfert de données vers une seconde vitesse de transfert de données, inférieure à ladite première vitesse de transfert de données, et faire fonctionner ledit système de stockage optique (1) dans ledit mode normal présentant ladite seconde vitesse de transfert de données,
b2) déterminer, après une période de temps prédéterminée, si ladite température est encore supérieure audit seuil prédéterminé et, si c'est le cas,
c2) alors faire fonctionner alors ledit système de stockage optique (1) dans un mode alternant dans lequel il est actif tantôt dans un mode normal présentant ladite seconde vitesse de transfert, et tantôt dans un mode d'économie d'énergie dans lequel ledit faisceau de balayage optique est éteint et ledit support de stockage optique (2) tourne.

2. Système de contrôle (90) suivant la revendication 1, dans lequel les étapes b1) et c1) sont répétées à des intervalles prédéterminés jusqu'à ce que la vitesse de transfert de données atteigne une vitesse de transfert de données minimale prédéterminée.

3. Système de contrôle (90) suivant la revendication 1, dans lequel l'étape a2) est répétée à des intervalles prédéterminés tandis que la température est encore déterminée comme étant supérieure au seuil prédéterminé, jusqu'à ce que la vitesse de transfert de données atteigne une vitesse de transfert de données minimale prédéterminée, auquel moment, si la température est encore déterminée comme étant supérieure au seuil prédéterminé, le système de stockage optique (1) est amené à fonctionner dans ledit mode alternant.

4. Système de contrôle (90) suivant la revendication 1, agencé et configuré pour réduire la vitesse de transfert de données en diminuant la vitesse de rotation du support de stockage optique (2).

5. Système de contrôle (90) suivant la revendication 1, agencé et configuré pour réduire directement la vitesse de transfert de données, provoquant ainsi une réduction résultante de la vitesse de rotation du support de stockage optique (2).

6. Système de contrôle (90) suivant la revendication 1, dans lequel la vitesse de rotation du support de stockage optique (2) pendant le mode normal et le mode d'économie d'énergie est sensiblement la même.

7. Système de contrôle (90) suivant la revendication 1, dans lequel le moyen de détection de température (50) est agencé pour détecter la température du moyen générateur de faisceau de balayage (30).

8. Système de contrôle (90) suivant la revendication 1, agencé et configuré pour comparer la température mesurée au seuil prédéterminé à des intervalles périodiques pendant tout le fonctionnement du système de stockage optique (1).

9. Système de contrôle (90) suivant la revendication 1, agencé et configuré pour tester la température par rapport au seuil prédéterminé en réaction à un événement spécifique.

10. Système de stockage optique (1) comprenant un système de contrôle suivant la revendication 1.

11. Procédé pour contrôler la température d'un système de stockage optique (1) comprenant un moyen (30) pour générer un faisceau de balayage optique et un moteur réglable (4) pour faire tourner un support de stockage optique (2), ledit procédé comprenant les étapes suivantes :
- détecter la température dudit système de stockage optique (1) afin de générer un signal (St),
- faire fonctionner ledit système de stockage optique (1) dans un mode normal présentant une première vitesse de transfert de données lorsque ladite température est déterminée comme étant en dessous d'un seuil prédéterminé, **caractérisé**, si
ladite température est déterminée comme étant au-dessus dudit seuil prédéterminé, par :
a) la commutation dudit système de stockage optique (1) vers un mode alternant dans lequel il est actif tantôt dans ledit mode normal présentant ladite première vitesse de transfert, et tantôt dans un mode d'économie d'énergie dans lequel ledit faisceau de balayage optique est éteint et ledit support de stockage optique (2) tourne,
b) la détermination, après une période de temps prédéterminée, si ladite température est encore supérieure audit seuil prédéterminé et, si c'est le cas,
c) la réduction de la vitesse de transfert de données vers une seconde vitesse de transfert de données inférieure à ladite première vitesse de transfert de données, et le fonctionnement dudit système de stockage optique (1) dans un mode alternant dans lequel il est actif tantôt dans un mode normal présentant ladite seconde vitesse de transfert de données, et tantôt dans un mode d'économie d'énergie dans lequel ledit faisceau de balayage optique est éteint et ledit support de stockage optique (2) tourne.

12. Procédé de contrôle de la température d'un système de stockage optique (1) comprenant un moyen (30) pour générer un faisceau optique de balayage et un moteur réglable (4) pour faire tourner un support de stockage optique (2), ledit procédé comprenant les étapes suivantes :
- détecter la température dudit système de stockage optique (1) pour générer un signal (St),
- faire fonctionner ledit système de stockage optique (1) dans un mode normal présentant une première vitesse de transfert de données lorsque ladite température est déterminée comme étant en dessous d'un seuil prédéterminé, **caractérisé**, si ladite température est déterminée comme étant supérieure audit seuil prédéterminé, par :
a) la réduction de ladite vitesse de transfert de données vers une seconde vitesse de transfert de données, inférieure à ladite première vitesse de transfert de données, et le fonctionnement dudit système de stockage optique (1) dans ledit mode normal présentant ladite seconde vitesse de transfert de données,
b) la détermination, après une période de temps prédéterminée, si ladite température est encore supérieure audit seuil prédéterminé et, si c'est le cas,
c) le fonctionnement dudit système de stockage optique (1) dans un mode alternant dans lequel il est actif tantôt dans un mode normal présentant ladite seconde vitesse de transfert, et tantôt dans un mode d'économie d'énergie dans lequel ledit faisceau de balayage optique est éteint et ledit support de stockage optique (2) tourne.
